Europäisches Patentamt

European Patent Office

Office européen des brevets

(19)

(11) Numéro de publication : **0 478 431 A1**

## (12) DEMANDE DE BREVET EUROPEEN

(21) Numéro de dépôt : **91402522.6**

(22) Date de dépôt : **23.09.91**

(51) Int. Cl.$^5$ : **G06F 15/347,** G06F 7/544,
G06F 15/332

(30) Priorité : **24.09.90 FR 9011758**

(43) Date de publication de la demande :
**01.04.92 Bulletin 92/14**

(84) Etats contractants désignés :
**DE GB**

(71) Demandeur : **FRANCE TELECOM**
**6 place d'Alleray**
**F-75015 Paris (FR)**

(72) Inventeur : **Mou, Zhi-Jian**
**Appt. 10 , 35 Avenue Laplace**
**F-94110 Arceuil (FR)**
Inventeur : **Jutand, Francis**
**4 Impasse Reille**
**F-75014 Paris (FR)**

(74) Mandataire : **Fréchède, Michel et al**
**Cabinet Plasseraud 84, rue d'Amsterdam**
**F-75009 Paris (FR)**

(54) **Procédé et circuit de codage d'un signal numérique pour déterminer le produit scalaire de deux vecteurs et traitement TCD correspondant.**

(57) L'invention concerne le codage d'un signal numérique pour déterminer le produit scalaire de deux vecteurs.

Pour deux vecteurs de même dimension p, de composantes dédiées ak et variables xk , la valeur

$$f(xk,ak) = \sum_{k=1}^{k=p} ak.xk$$

du produit scalaire est réduite en sommes partielles fi de variables binaires xki ; lesquelles prennent l'une des valeurs des composantes fixes ak selon les valeurs des xki selon m possibilités. Un codage logique dédié (1) permet, à partir des variables xki, d'engendrer pour chaque bit de rang j de fi, une pluralité de sommes partielles élémentaires, au niveau bit, fij selon $2^m$ possibilités par variation des valeurs binaires akj des bits de rang j. Une matrice bidimensionnelle d'interconnexion (2) fait correspondre à chaque bit de rang j akj une seule valeur des sommes partielles élémentaires fij, dont l'ensemble définit la somme partielle fi correspondante.

Application aux circuits de traitement d'image et de compression de données par transformée TCD.

FIG.2c.

EP 0 478 431 A1

L'invention concerne un procédé et un circuit de codage d'un signal numérique pour déterminer le produit scalaire (ou produit intérieur) de deux vecteurs.

Dans les techniques actuelles de traitement de signal numérique il est le plus souvent nécessaire d'effectuer le calcul de multiplications et de produits scalaires de vecteurs, l'un des vecteurs étant constant, c'est à dire comportant des composantes dédiées déterminées. On rappelle que pour un vecteur de dimension p de composantes dédiées

$$\{ak\}_{k=1}^{k=p}$$

et pour un vecteur de composantes quelconques

$$\{xk\}_{k=1}^{k=p}$$

la valeur du produit scalaire, exprimée sous forme d'une fonction valeur du produit scalaire s'écrit f(xk,ak)=

$$\sum_{k=1}^{k=p} ak.xk \quad .$$

Lorsque l'un des vecteurs correspond à une application dédiée, les composantes ak de ce dernier correspondant à des composantes dédiées, c'est à dire de valeur constante pour l'application considérée, une technique de codage correspondante, conformément à l'objet de la présente invention, peut être mise en oeuvre pour le calcul, soit d'un produit scalaire de deux vecteurs, soit d'une multiplication de deux valeurs, l'opération de multiplication de deux valeurs s'analysant en définitive en un produit scalaire de deux vecteurs de dimension p=1. Ainsi qu'il apparaîtra ultérieurement à la lecture de la description, les circuits permettant la mise en oeuvre du procédé de codage objet de la présente invention sont, du fait du mode de codage précité, particulièrement simplifiés.

Le procédé de codage d'un signal numérique pour déterminer le produit scalaire de deux vecteurs de même dimension p de composantes

$$\{ak\}_{k=1}^{k=p}$$

dédiées et

$$\{xk\}_{k=1}^{k=p}$$

objet de la présente invention, est remarquable en ce qu'il consiste à exprimer la fonction valeur du produit scalaire

$$f(xk,ak) = \sum_{k=1}^{k=p} ak.xk$$

2

EP 0 478 431 A1

sous forme de sommes partielles de produits fi de variables binaires {xki}, chaque somme partielle de produits fi prenant l'une des valeurs des composantes fixes ak selon les valeurs desdites variables binaires {xki}, selon m possibilités, puis à décomposer, au niveau bit, chaque somme partielle de produits fi en ses sommes partielles élémentaires au niveau bit fij pour chaque bit de rang j, chaque somme partielle élémentaire fij prenant l'une des valeurs akj selon les valeurs desdites variables binaires {xki}. Un calcul des sommes partielles élémentaires au niveau bit fij est effectué par évaluation d'une pluralité de $2^m$ possibilités par variation des valeurs binires akj, ce qui permet d'effectuer le calcul de chaque somme partielle fi à partir des sommes partielles élémentaires au niveau bit fij puis de la fonction valeur du produit scalaire.

Le circuit de codage d'un signal numérique pour déterminer le produit scalaire de deux vecteurs de même dimension p de composantes

$$\{ak\}_{k=1}^{k=p}$$

dédiées et

$$\{xk\}_{k=1}^{k=p}$$

variables codées sur N bits, objet de la présente invention, est remarquable en ce que, la valeur du produit scalaire

$$f(xk,ak) = \sum_{k=1}^{k=p} ak.xk$$

étant réduite sous forme de sommes partielles fi de variables binaires xki , chaque somme partielle de produits fi prenant l'une des valeurs des composantes fixes ak selon les valeurs des variables binaires {xki} selon m possibilités, ce circuit comprend des moyens de codage logique permettant, à partir des variables binaires, d'engendrer pour chaque bit de rang j des sommes partielles fj, une pluralité de sommes partielles élémentaires au niveau bit fij par évaluation d'une pluralité de $2^m$ possibilités par variation des valeurs binaires akj des bits de même rang j des composantes dédiées

$$\{ak\}_{k=1}^{k=p}$$

et au moins une matrice bidimensionnelle, ladite matrice bidimensionnelle faisant correspondre à chaque bit de rang j des composantes dédiées ak une valeur et une seule des sommes partielles au niveau bit fij, l'ensemble des sommes partielles au niveau bit fij définissant la somme partielle fi correspondante.

Le procédé et le circuit de codage objets de la présente invention trouvent application dans tous type de processeur de calcul numérique et notamment les processeurs de traitement numérique d'images et de compression de données numériques par transformée en cosinus discrète TCD.

Le procédé et le circuit de codage d'un signal numérique pour déterminer le produit scalaire de deux vecteurs de même dimension p, objets de la présente invention, seront mieux compris à la lecture de la description et à l'observation des dessins ci-après dans lesquels :

– la figure 1a représente un schéma synoptique de mise en oeuvre générale du procédé objet de l'invention,

– la figure 1b représente un schéma synoptique de mise en oeuvre du procédé objet de l'invention plus particulièrement illustratif du procédé de codage selon l'invention relativement à des vecteurs de dimension

3

p=2, à raison d'un bit par cycle d'horloge de cadencement,

– la figure 1c représente un schéma synoptique de mise en oeuvre du procédé objet de l'invention plus particulièrement illustratif du procédé de codage selon l'invention relativement à des vecteurs de dimension p=1, calcul d'un produit de deux valeurs, à raison de deux bits par cycle d'horloge de cadencement,

– les figures 1d et 1e représentent des schémas synoptiques de circuits susceptibles de permettre la mise en oeuvre du procédé objet de la présente invention dans le mode de réalisation de la figure 1b respectivement 1c,

– les figures 2a et 2b représentent un schéma d'un circuit de codage, selon le procédé tel que représenté en fig. 1b, conformément à l'objet de la présente invention,

– les figures 2c et 2d représentent un schéma d'un circuit de codage, selon le procédé tel que représenté en figure 1c, conformément à l'objet de la présente invention,

– la figure 2e représente un détail de réalisation des figures 2a, 2c,

– les figures 3a, 3b, 3c, 3d, 3e représentent chacune un schéma d'un circuit de combinaison de deux, figures 3a, 3b, ou quatre, figures 3c, 3d, 3e, sommes partielles fi, gi, hi, ei relatives à des vecteurs résultants à deux composantes, sous ensembles, ou sous vecteurs, d'un espace vectoriel de dimension p>2 multiple de deux,

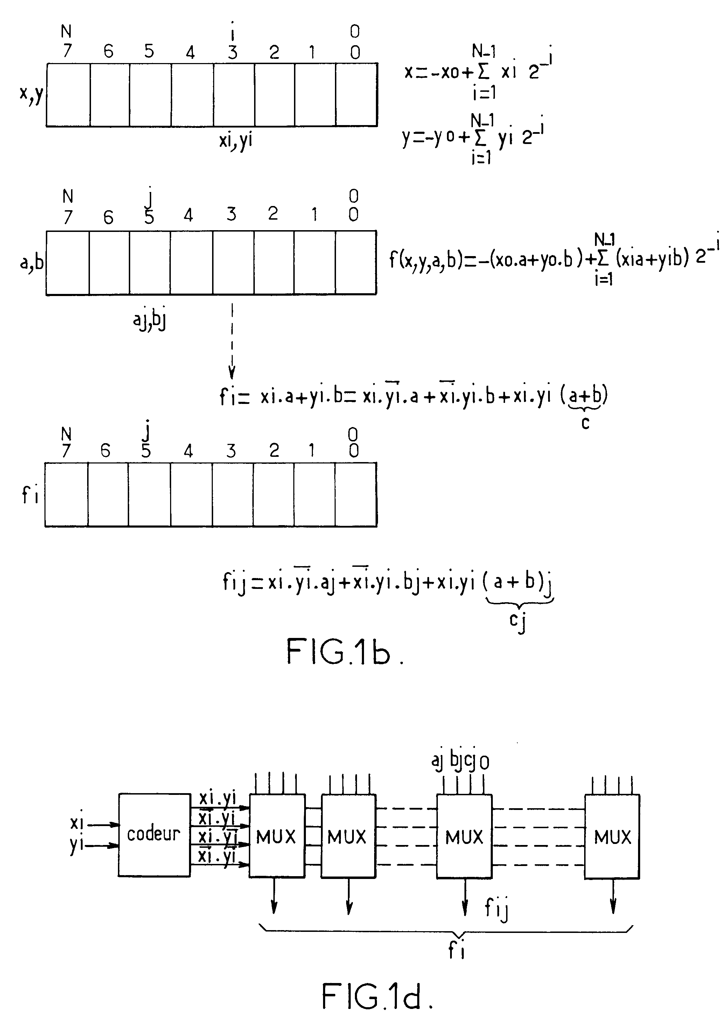

– la figure 4a représente un schéma d'un système de traitement de données numériques d'images par transformation en cosinus discrète TCD, les coefficients de la matrice TCD jouant le rôle des composantes dédiées

$$\left\{ak\right\}_{k=1}^{k=p}$$

selon le procédé objet de l'invention tel que décrit en figure 1b,

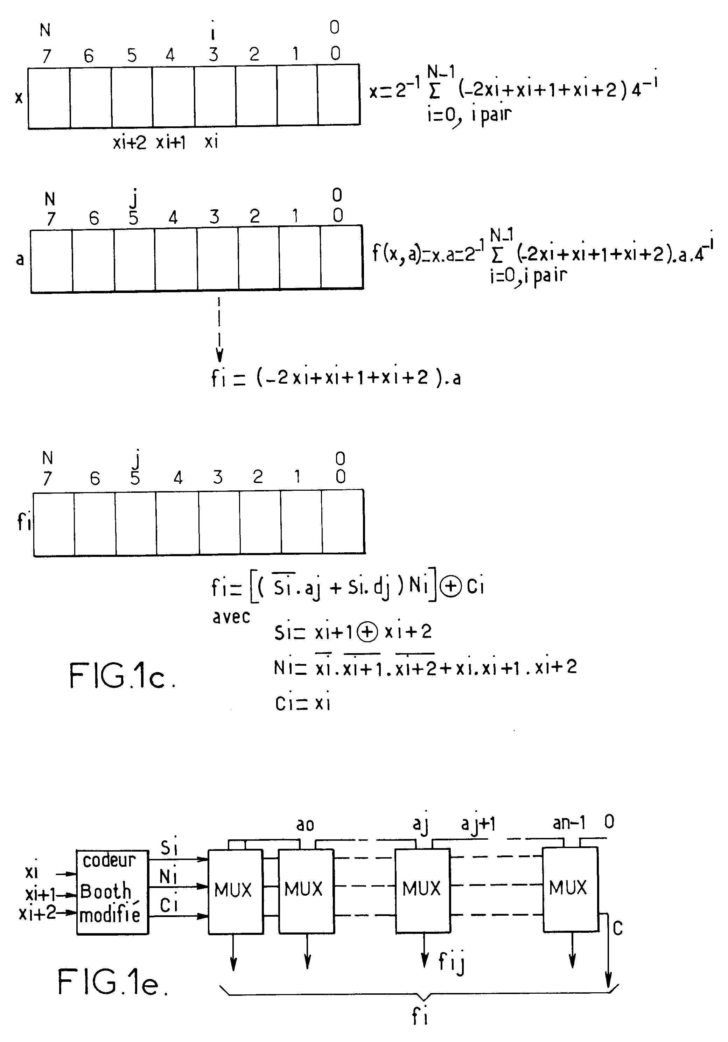

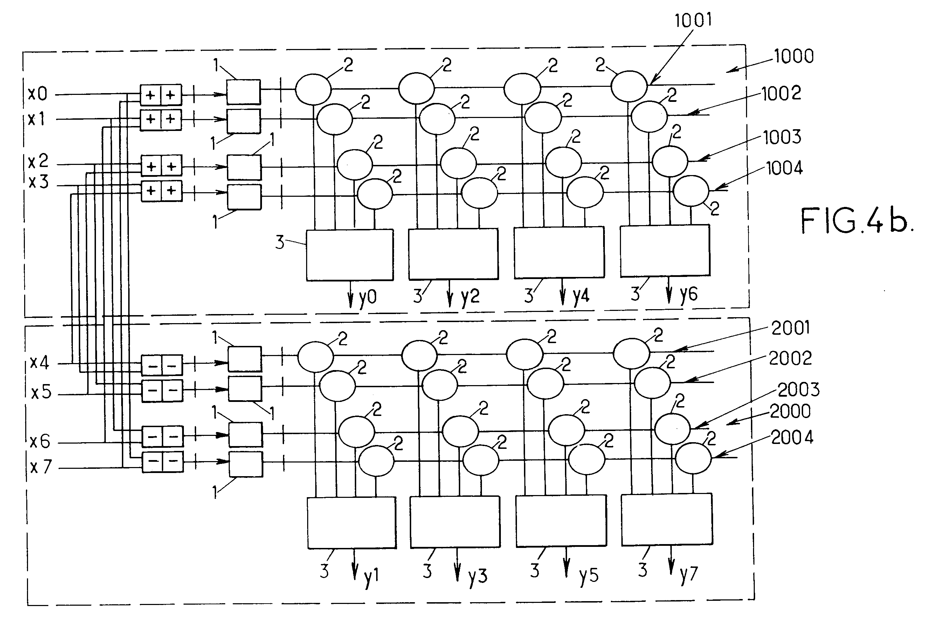

– la figure 4b représente un schéma d'un système de traitement de données numériques d'images par transformation en cosinus discrète TCD les coefficients de la matrice TCD jouant le rôle des composantes

$$\left\{ak\right\}_{k=1}^{k=p}$$

selon le procédé objet de l'invention tel que décrit en figure 1c.

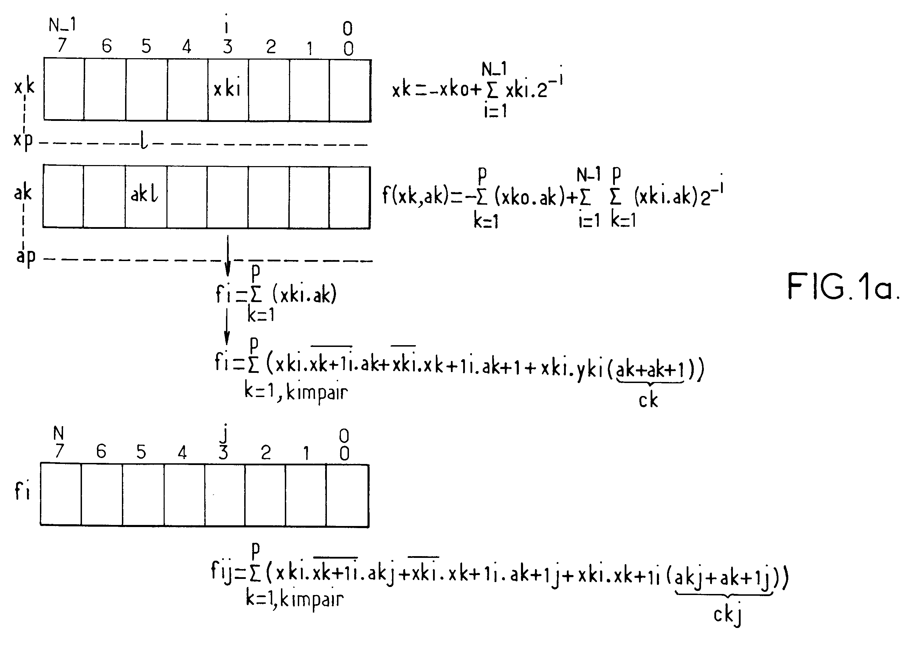

Une description plus détaillée du procédé de codage d'un signal numérique en vue de déterminer le produit scalaire de deux vecteurs conformes à l'objet de la présente invention sera donnée en liaison avec les figures 1a puis 1b, 1c.

Ainsi qu'on l'a représenté sur la figure 1a le procédé de codage objet de la présente invention est appliqué à un signal numérique afin de déterminer le produit scalaire de deux vecteurs de même dimension p.

L'un des vecteurs comporte des composantes dédiées, notées $\{ak\}$, ces composantes étant constantes pour une application considérée et l'autre vecteur comporte des composantes variables, notées $\{xk\}$. Les composantes des deux vecteurs sont codées sur N bits les bits des composantes respectives étant notés de 0 à N-1 sur la figure 1a, le bit courant de chaque composante xk respectivement ak étant noté i respectivement I et les valeurs de ces bits étant notées respectivement xki, aki.

La valeur du produit scalaire des vecteurs précités conformément au procédé objet de l'invention est exprimée par une fonction valeur du produit scalaire notée :

$$f(xk,ak) = \sum_{k=1}^{p} ak.xk,$$

et le procédé objet de l'invention consiste, ainsi que représenté en figure 1a, à exprimer cette fonction valeur du produit scalaire sous forme de sommes partielles de produits fi de variables binaires xki, ces variables binaires étant bien entendu les valeurs correspondantes de chaque bit d'ordre i sur lesquelles les composantes précitées sont codées.

Ainsi, par exemple chaque composante xk conformément au procédé objet de l'invention est exprimée par la relation :

$$xk = -xko + \sum_{i=1}^{N-1} xki.2^{-i}$$

et la fonction valeur du produit scalaire vérifie alors la relation :

$$f(xk,ak) = -\sum_{k=1}^{p} (xko.ak) + \sum_{i=1}^{N-1} \sum_{k=1}^{p} (xki.ak)2^{-i}$$

Dans ces conditions, et par identification conformément au procédé objet de l'invention, chaque somme partielle de produit fi vérifie la relation :

$$fi = \sum_{k=1}^{p} (xki.ak)$$

et prend l'une des valeurs des composantes fixes ak selon les valeurs des variables binaires xki précitées selon m possibilités. On comprendra bien sûr que m est nécessairement un paramètre vérifiant la relation :

$$\text{si } p \geqq 2, m = 2^p - 1$$
$$\text{si } p = 1, m = 2.$$

Conformément au procédé objet de la présente invention, celui-ci consiste alors ensuite à décomposer au niveau bit chaque somme partielle de produits fi en ses sommes partielles élémentaires au niveau bit, notées fij, j désignant l'ordre des bits de chaque somme partielle fi codée sur N bits.

Ainsi qu'on l'a représenté en figure la chaque somme partielle fi vérifie la relation :

$$fi = \sum_{k=1,impair}^{p} (xki.\overline{xk+1\ i}.ak + \overline{xki}.xk+1i.ak+1 + xki.yki(\underbrace{ak+ak+1}_{ck}))$$

A partir de l'expression de chaque somme partielle fi précitée, chaque somme partielle élémentaire fij au niveau de chaque bit d'ordre j vérifie la relation :

$$fij = \sum_{k=1,impair}^{p} (xki.\overline{xk+1i}.akj + \overline{xki}.xk+1i.ak+1j + xki\ xk+1i(\underbrace{akj+ak+1j}_{ckj}))$$

On comprendra ainsi que chaque somme partielle élémentaire fij prend l'une des valeurs akj, où akj désigne bien entendu la valeur binaire correspondante d'ordre j de la composante ak correspondante, selon les valeurs des variables binaires xki précitées.

Conformément au procédé objet de l'invention, les sommes partielles élémentaires au niveau bit fij sont alors calculées par évaluation d'une pluralité de $2^m$ possibilités par variation des valeurs binaires akj précitées, ce qui permet d'effectuer ensuite le calcul de chaque somme partielle fi à partir des sommes partielles élémentaires au niveau bit fij puis le calcul de la fonction valeur du produit scalaire précitée.

On notera que le procédé de codage d'un signal numérique pour déterminer le produit scalaire de deux vecteurs de même dimension p, objet de la présente invention, n'est en aucun cas limité à une dimension déterminée de ces vecteurs. Cependant, le nombre des opérations effectuées fonction du nombre de bits sur lesquels sont codées les composantes et du nombre de ces composantes, et donc de la dimension des vecteurs précités, croit de manière exponentielle en fonction de ces paramètres.

Une étude mathématique montre qu'en fait le procédé de codage objet de la présente invention peut de manière avantageuse être mis en oeuvre pour des vecteurs de dimension faible, p=2 par exemple, ce procédé pouvant alors être appliqué de manière simultanée à des sous ensembles de vecteurs constituant des sous-vecteurs de la dimension précitée pour assurer le traitement de vecteurs de dimension quelconque, multiple de la dimension p=2 précitée.

Conformément aux considérations précitées, deux exemples de mise en oeuvre du procédé objet de l'invention seront donnés à titre d'exemple non limitatif en référence aux figures 1b respectivement 1c.

Ainsi qu'on l'a représenté en figure 1b, afin d'effectuer le calcul pour tout vecteur de dimension p=2 ou pour tout vecteur résultant de composantes notées a,b; x,y avec (a1=a, a2=b et x1=x, x2=y) sous ensembles d'un espace vectoriel de dimension p plus grand que 2 les composantes x,y vérifient respectivement les relations :

$$x = -xo + \sum_{i=1}^{N-1} xi.2^{-i}$$

$$y = -yo + \sum_{i=1}^{N-1} yi.2^{-i}$$

Dans ces relations xi,yi désignent les valeurs binaires ou variables binaires correspondant aux variables x y pour le rang i des bits considérés.

La fonction valeur du produit scalaire s'écrit alors :

$$f(x,y;a,b) = -(xo.a+yo.b) + \sum_{i=1}^{N-1} (xi.a+yi.b)2^{-i}$$

et les sommes partielles fi vérifient la relation :

$$fi = xi.a+yi.b = xi.\overline{yi}.a+\overline{xi}.yi.b+xi.yi\underbrace{(a+b)}_{c}$$

Chacune des sommes partielles élémentaires fij au niveau bit de rang j, pour chacun des bits d'ordre j, vérifie alors la relation :

$$fij = xi.\overline{yi}.aj+\overline{xi}.yi.bj+xi.yi.\underbrace{(a+b)j}_{cj}$$

Dans la relation précitée, aj, bj et cj désignent des valeurs binaires correspondantes pour les bits de rang j des composantes a, b ou du paramètre c représentatif de la somme a+b.

Ainsi, chaque somme partielle fi peut prendre quatre valeurs possibles : a,b,c,0 compte tenu du fait que xi et yi sont des variables binaires. Etant donné que a et b sont des composantes dédiées, il est alors possible, conformément au procédé objet de l'invention, de calculer c pour assurer la mise en oeuvre de celui-ci.

Au niveau bit, le bit de rang j de chaque somme partielle fi, c'est à dire chaque somme partielle élémentaire fij, prend la valeur aj ou bj ou cj ou 0.

Compte tenu de la relation donnant chaque somme partielle élémentaire fij celle-ci peut être alors considérée comme une fonction de xi,yi pour les constantes aj, bj, cj considérées. En raison du fait que les constantes aj, bj et cj sont des variables binaires, il existe en fait huit valeurs possibles pour l'expression des sommes partielles élémentaires fij selon la table de vérité donnée selon le tableau numéro 1 ci-après :

| $a_j$ | $b_j$ | $c_j$ | $f_{ij}$ $(X_i,Y_i;a_j,b_j,c_j)$ |
|-------|-------|-------|----------------------------------|
| 0 | 0 | 0 | 0 |
| 0 | 0 | 1 | $\overline{X_i}Y_i$ |
| 0 | 1 | 0 | $X_i\overline{Y_i}$ |
| 0 | 1 | 1 | $Y_i$ |
| 1 | 0 | 0 | $X_i\overline{Y_i}$ |
| 1 | 0 | 1 | $X_i$ |
| 1 | 1 | 0 | $X_i \oplus Y_i$ |
| 1 | 1 | 1 | $X_i + Y_i$ |

On notera qu'afin d'assurer la mise en oeuvre du procédé objet de l'invention, il est possible d'engendrer directement les sommes partielles élémentaires fij à partir d'un circuit de codage tel que représenté en figure 1d, ce circuit de codage comportant des circuits logiques permettant de réaliser l'ensemble des combinaisons des différentes valeurs binaires xi yi soit les produits xi.yi, $\overline{xi}$.yi xi.$\overline{yi}$ et $\overline{xi}$.$\overline{yi}$. Chacun des multiplexeurs reçoit les valeurs correspondantes aj, bj cj et la valeur 0 et délivre chacun un bit représentatif de la somme partielle élémentaire correspondante fij, la somme partielle fi pouvant alors être obtenue par concaténation des bits représentatifs de chaque somme partielle élémentaire fij.

Alors que le procédé objet de la présente invention, dans son mode de mise en oeuvre tel que représenté en liaison avec la figure 1b, permet d'assurer le traitement d'un bit par cycle d'horloge de cadencement dans un circuit de mise en oeuvre spécifique qui sera décrit ultérieurement dans la description, un deuxième mode de réalisation avantageux du procédé de codage objet de la présente invention permettant le traitement de deux bits par cycle d'horloge de cadencement dans la technique de codage de BOOTH modifié, ci-après désigné codage MBE, sera décrit en liaison avec la figure 1c pour le calcul du produit scalaire de deux vecteurs de dimension p=1, c'est à dire en fait pour le calcul du produit de deux valeurs ou pour le calcul pour tout vecteur résultant à une composante a.x avec a1=a et x1=x sous ensemble d'un espace vectoriel de dimension p > 1.

Dans le mode de réalisation précité du procédé de codage objet de l'invention, la composante x avec x=x1 est supposée codée selon un code en complément à deux et peut être exprimée sous la forme :

$$x = 2^{-1} \sum_{i=o,\, i\ \text{pair}}^{N-1} (-2x_i+x_{i+1}+x_{i+2})4^{-i}$$

La fonction d'évaluation du produit scalaire vérifie alors la relation :

$$f(x,a)=x.a= 2^{-1} \sum_{i=o,\ i\ pair}^{N-1} (-2xi+xi+1+xi+2).a.4^{-i}$$

Dans l'expression de la fonction d'évaluation précitée on notera que la sommation sur i porte sur les valeurs paires de celui-ci.

Compte tenu de l'expression de la fonction d'évaluation précédemment citée, et par identification, chaque somme partielle fi de produit est ramenée à un produit partiel sur trois bits successifs de rang i, i+1 i+2 et vérifie la relation :

$$fi = (-2xi + xi + 1 + xi + 2).a$$

On notera alors que chaque produit partiel fi peut prendre en fonction des valeurs binaires correspondantes xi, xi+1, xi+2, lesquelles bien entendu correspondent aux valeurs des bits de rang i, i+1, i+2 de la composante x précitée, les valeurs d=2a, a, 0, -a, -d = -2a.

Ainsi qu'on l'a représenté en outre en figure 1c, la décomposition au niveau bit de rang j de chaque produit partiel fi est réalisée sous forme de produit élémentaire au niveau bit fij. Chaque produit élémentaire au niveau bit fij vérifie la relation, pour chaque bit de rang j des valeurs binaires correspondantes aj, bj des valeurs a et d :

$$fij = [(\overline{Si}.aj + Si.dj)Ni] \oplus Ci$$

Dans la relation précédente, les paramètres Si, Ni et Ci vérifient respectivement les relations :

$Si = xi+1 \oplus xi+2$

$Ni = \overline{xi.xi+1.xi+2+xi.xi+1.xi+2}$

$Ci = xi$

Dans les relations précédentes on notera que Si désigne un paramètre de contrôle de décalage, ce paramètre Si étant égal à 1 si fi est égal à {-d, d} sinon Si = 0, Ni désigne un paramètre de contrôle d'absence de valeur 0, Ni = 1 si fi = {-d, -a, a, d} sinon Ni = 0, Ci = xi le paramètre Ci désignant un paramètre de commande de complément tel que Ci = 1 si fi = {-a, -d} sinon Ci = 0, le signe $\oplus$ désignant de manière conventionnelle l'opération OU EXCLUSIF. On notera que l'expression de Si, Ni et Ci telle que donnée précédemment peut être obtenue à partir de la table de vérité telle que représentée au tableau 2 ci-après.

| $x_i$ | $x_{i+1}$ | $x_{i+2}$ | S(i) Décalage | N(i) Nonzero | C(i) Complément |
|---|---|---|---|---|---|
| O | O | O | $\phi$ | O | $\phi$ |
| O | O | 1 | O | 1 | O |
| O | 1 | O | O | 1 | O |
| O | 1 | 1 | 1 | 1 | O |
| 1 | O | O | 1 | 1 | 1 |
| 1 | O | 1 | O | 1 | 1 |
| 1 | 1 | O | O | 1 | 1 |
| 1 | 1 | 1 | $\phi$ | O | $\phi$ |

Dans le tableau 2 précité on notera que le signe $\phi$ désigne un état arbitraire.

Le schéma d'un circuit permettant la mise en oeuvre du procédé objet de la présente invention dans son deuxième mode de réalisation dans le cas du calcul d'un produit de deux valeurs selon un codage BME est donné en figure 1e.

Ce circuit comporte un codeur de BOOTH modifié, lequel à partir des bits de rang i, i+1, i+2 et de valeur correspondante xi, xi+1, xi+2 de la composante x délivre les paramètres précédemment décrits Si, Ni et Ci. On notera bien entendu que le codeur de BOOTH modifié, dans ce cas est réalisé à l'aide de circuits logiques de type classique permettant de réaliser les opérations logiques correspondantes permettant de définir les paramètres précités.

En outre, le circuit tel que représenté en figure 1e comporte une pluralité de multiplexeurs, lesquels recevant en outre les variables binaires ou bits d'ordre j de la composante a, ces bits étant notés $a_j$ avec j compris entre 0 et N-1, permettent de délivrer chacun les produits élémentaires fij, le produit partiel fi étant alors obtenu, comme précédemment dans le cas de la figure 1d, par concaténation des bits délivrés par chaque multiplexeur et représentatifs des produits partiels élémentaires fij.

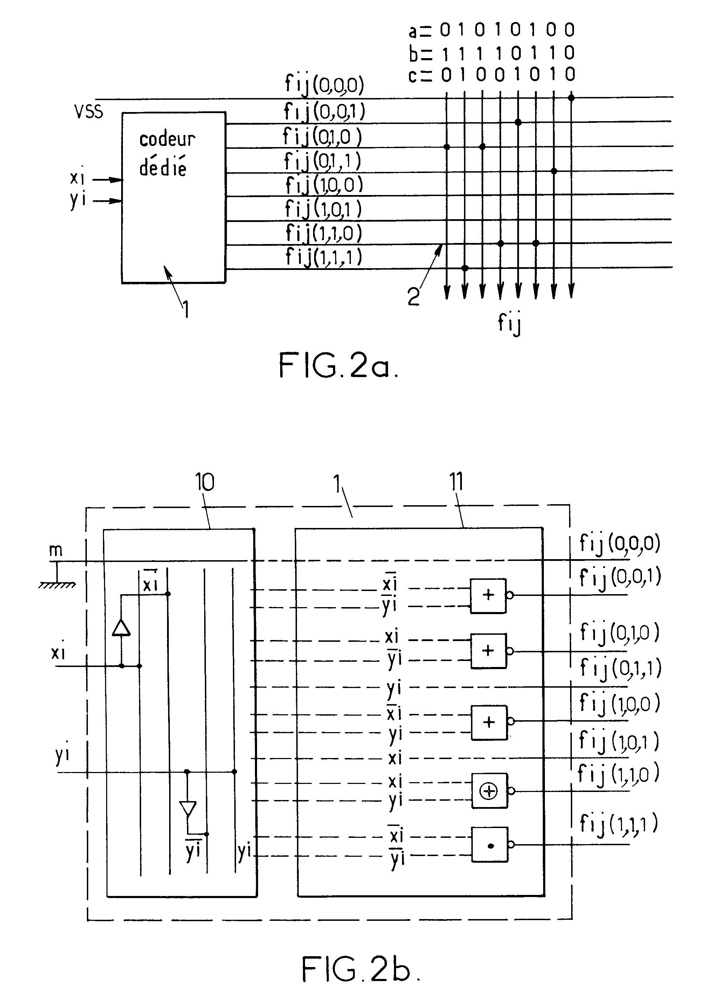

Une description plus détaillée d'un circuit de codage d'un signal numérique pour déterminer le produit scalaire de deux vecteurs de même dimension p, ce circuit de codage conformément à l'objet de la présente invention apparaissant particulièrement avantageux dans la mesure où par la mise en oeuvre d'un circuit de codage spécifique ce circuit de codage dédié permet de supprimer l'utilisation de multiplexeurs tels que précédemment décrits en liaison avec les figures 1d et 1e, sera donnée respectivement avec les figures 2a et 2b relativement à la mise en oeuvre du procédé objet de l'invention tel que représenté en figure 1b respectivement 1c.

De manière générale, ainsi que représenté en figure 2a, on notera que le circuit comprend un circuit de codage logique dédié, noté 1, permettant à partir des variables binaires xki d'engendrer pour chaque bit de rang i des sommes partielles fj une pluralité de sommes partielles élémentaires au niveau bit fij par évaluation d'une pluralité de $2^m$ possibilités par variation des valeurs binaires akj des bits de même rang j des composantes dédiées ak.

Le circuit de codage objet de la présente invention comporte également au moins une matrice bidimensionnelle de dimension $2^m$, N cette matrice bidimensionnelle, notée 2, assurant une fonction d'interconnexion en faisant correspondre à chaque bit de rang j des composantes dédiées ak une valeur et une seule des sommes partielles au niveau bit fij délivrées par le circuit de codage logique dédié 1.

Ainsi que décrit précédemment l'ensemble des sommes partielles au niveau bit fij définit la somme partielle fi correspondante par concaténation des bits représentatifs des sommes partielles élémentaires fij correspondantes, ainsi que décrit précédemment dans la description.

On notera que de manière générale, le circuit de codage d'un signal numérique par codage dédié, objet de la présente invention, est particulièrement avantageux par rapport au mode de réalisation des figures 1d et 1e précédemment décrites puisque par l'introduction du codage dédié, au niveau du circuit de codage logique dédié 1, celle-ci permet la suppression des multiplexeurs, ceux-ci étant simplement remplacés par une matrice bidimensionnelle d'interconnexions par points, ainsi qu'il sera décrit ultérieurement dans la description.

Une description plus détaillée du circuit de codage objet de la présente invention dans le cas de la mise en oeuvre du procédé tel que représenté en figure 1d sera donnée en liaison avec les figures 2a et 2b.

Dans un tel cas, pour tout vecteur de dimension p=2 ou pour tout vecteur résultant de composantes a1=a a2=b et x1=x et x2=y, sous-ensembles d'un espace vectoriel de dimension p > 2, chaque somme partielle élémentaire fij au niveau bit pour chaque bit d'ordre j vérifie la relation précédemment décrite dans la description.

Dans cette relation, les termes aj, bj, cj désignent les valeurs binaires d'ordre j correspondantes des composantes a, b, c précédemment définies.

Dans ce cas, ainsi que représenté en figures 2a et 2b le circuit de codage logique dédié 1 comprend un circuit d'entrée 10 recevant les variables binaires xi, yi de rang i des composantes x, y. Ce circuit d'entrée comprend, ainsi que représenté en figure 2b, deux inverseurs notés 101, 102 permettant d'engendrer les valeurs complémentaires $\overline{xi}$, $\overline{yi}$ des variables binaires xi, yi. Le circuit d'entrée 10 délivre les variables binaires xi, yi et leurs valeurs complémentées $\overline{xi}$, $\overline{yi}$.

En outre, le circuit de codage logique dédié 1 comporte une pluralité 11 de portes logiques permettant d'engendrer les $2^m$ = 8 valeurs possibles des sommes partielles élémentaires au niveau bit fij pour les valeurs correspondantes des valeurs binaires d'ordre j des composantes a, b et c. La pluralité de portes logiques 11 délivre les valeurs correspondantes des sommes partielles élémentaires fij soit :

fij (O,O,O) = 0,
fij (O,O,1) = xi.yi,
fij (O,1,O) = $\overline{xi}$.yi,
fij (O,1,1) = yi,
fij (1,O,O) = xi.$\overline{yi}$,
fij (1,O,1) = xi,
fij (1,1,O) = xi.$\overline{yi}$ + $\overline{xi}$.yi,
fij (1,1,1) = xi+yi

On notera que les portes logiques utilisées dans la pluralité de portes logiques 11 sont essentiellement constituées soit par des portes NON OU ou des portes NON ET et par une porte OU EXCLUSIF.

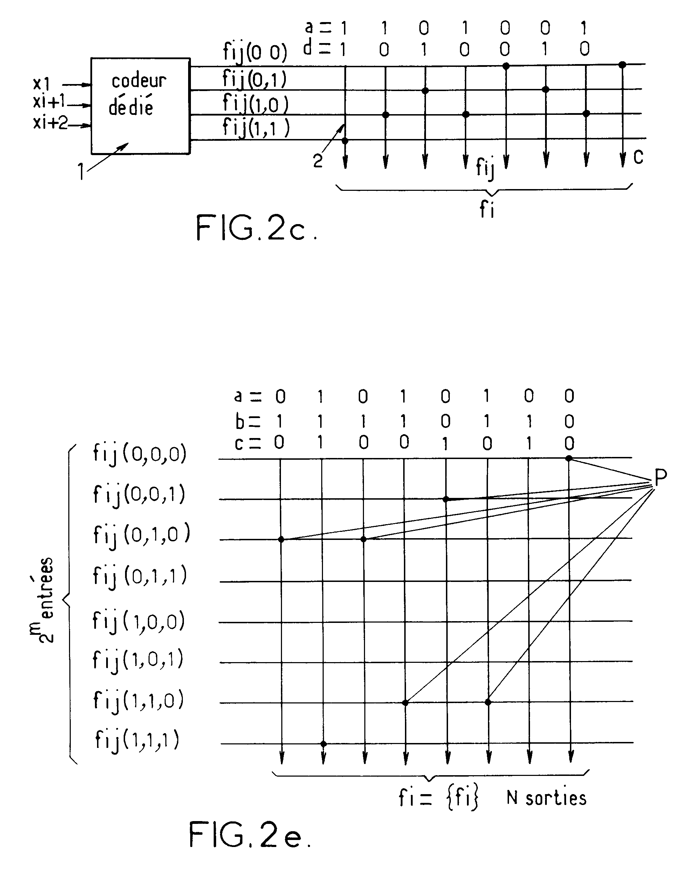

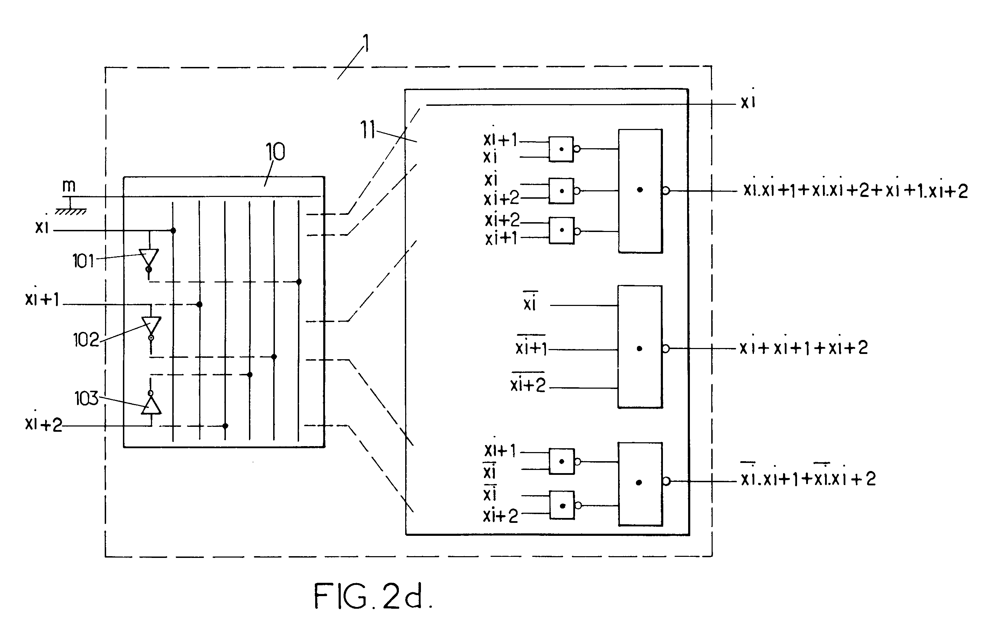

Une description plus détaillée d'un circuit de codage permettant la mise en oeuvre du procédé tel que précédemment décrit en liaison avec la figure 1c sera maintenant donnée en liaison avec la figure 2c et la figure 2d.

On rappelle que, dans ce cas, pour tout vecteur de dimension p = 1 ou pour tout vecteur résultant à une composante a1 = a et x1 = x sous ensembles d'un espace vectoriel de dimension p > 1 , chaque somme partielle fi de produit ramené à un produit partiel sur 3 bits successifs de rang i, i+1, i+2 de la composante x , chaque produit partiel correspondant peut prendre en fonction des valeurs binaires correspondantes xi, xi+1 et xi+2 les valeurs d=2a, a, 0, -a, -d=-2a.

Ainsi que représenté d'ailleurs en figure 2d, le circuit de codage logique dédié 1 comporte dans ce cas également un circuit d'entrée, noté 10, recevant les variables binaires xi, xi+1 et xi+2 de rang correspondant de la composante x, ce circuit d'entrée comportant trois inverseurs notés respectivement 101, 102, 103 permettant d'engendrer les valeurs complémentées $\overline{xi}$, $\overline{xi+1}$ et $\overline{xi+2}$ des variables binaires xi, xi+1, xi+2. Le circuit d'entrée 10 délivre les variables binaires précitées et leurs valeurs complémentées.

En outre, le circuit de codage logique dédié 1 comprend une pluralité de portes logiques 11 permettant d'engendrer les $2^m$=4 valeurs possibles des sommes partielles élémentaires au niveau bits fij pour les valeurs correspondantes des valeurs binaires d'ordre j des produits partiels a et d. La pluralité 11 de portes logiques délivre les produits élémentaires au niveau bits fij, lesquels peuvent être déterminés pour les valeurs des variables logiques aj, bj par la table de vérité donnée ci-après dans le tableau n° 3 :

| $a_j$ $b_j$ | $f_{ij}$ ($S_i$, $N_i$, $C_i$, aj, bj) | $f_{ij}(x_i,x_{i+1},x_{i+2}; a_j,b_j)$ |
|---|---|---|
| 0  0 | $C_i$ | $x_i$ |
| 0  1 | $(S_i N_i) \oplus C_i$ | $x_i (x_{i+1}+x_{i+2})+ x_{i+1}x_{i+2}$ |
| 1  0 | $(\overline{S_i} N_i) \oplus C_i$ | $x_i + x_{i+1} + x_{i+2}$ |
| 1  1 | $N_i \oplus C_i$ | $x_i (x_{i+1} + x_{i+2})$ |

On notera que le mode de réalisation tel que représenté en figure 2c est donné à titre d'exemple non limitatif pour a = 101001, la valeur signée de a étant égale à a = 1101001, la valeur de d = 2a étant alors égale à 1010010.

On rappellera de manière classique que pour une valeur a codée sur N bits la valeur négative - a vérifie la relation :

$$ - a = \overline{a} + 2^{-N+1} = (- \overline{a}_0 + \sum_{j=1}^{N-1} a_j\, 2^{-j}) + 2^{-N+1} $$

Une description plus détaillée de la matrice bidimensionnelle utilisée dans l'un ou l'autre des modes de réalisation du circuit de codage objet de la présente invention tel que représenté en figure 2a ou 2c sera donnée en liaison avec la figure 2d.

Sur la figure 2e on a représenté la matrice bidimensionnelle précitée dans le cas non limitatif du premier mode de réalisation, les $2^m$ entrées recevant chacune une valeur de somme partielle ou de produits élémentaires au niveau bits fij. La matrice est elle-même constituée en un réseau maillé programmable entre conducteurs reliés aux entrées et conducteurs reliés aux sorties précitées. En un point P du réseau est formée une liaison électrique aux adresses correspondantes d'entrées et de sorties de façon à mettre en correspondance chaque sortie avec une entrée de valeur correspondante. On notera ainsi que pour obtenir en sortie la valeur fij (0,0,0) le point P correspondant est réalisé à l'adresse a=0 b=0 c=0 ainsi que représenté sur la figure 2d. Il en est de même pour les points P correspondants représentés sur cette figure.

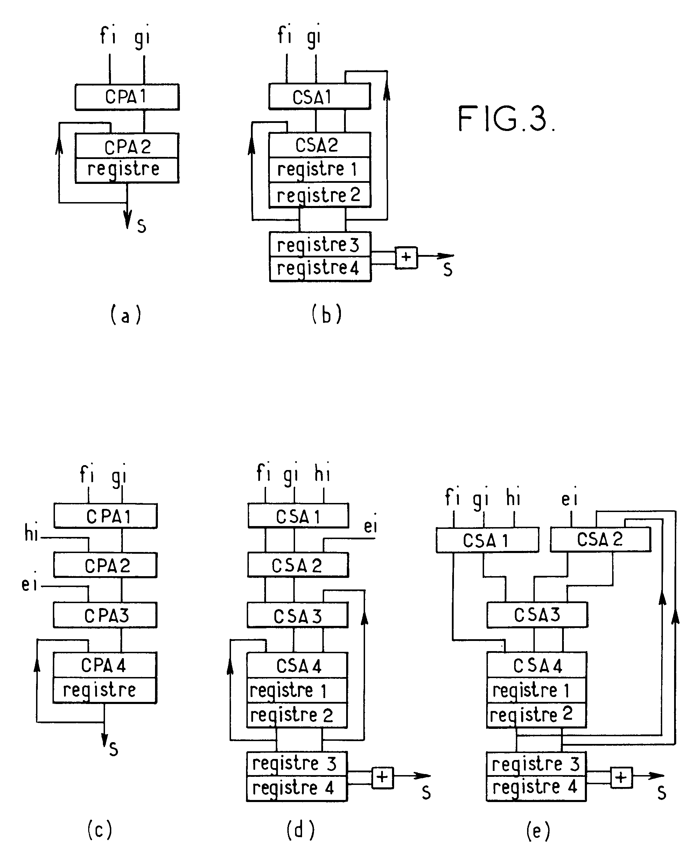

Sur la figure 3 aux points a, b, c, d, e on a représenté un schéma de mise en oeuvre d'un dispositif de calcul de produit scalaire de deux vecteurs de dimension 2q avec q > 1.

Dans ce but, ainsi que précédemment mentionné dans la description, chaque vecteur est subdivisé en q sous-vecteurs de dimension 2 et chaque couple de sous vecteurs relatif aux composantes dédiées et aux composantes variables est alors soumis au moyen d'un des circuits de codage objet de la présente invention, tel que représenté précédemment en figure 2a, 2b ou 2c, 2d, à un traitement pour engendrer une somme partielle correspondante notée ei, fi, gi ou hi par exemple. Chaque somme partielle précédemment mentionnée est introduite dans un dispositif sommateur tel que représenté aux points a à e précédemment mentionnés.

En ce qui concerne le sommateur représenté au point a de la figure 3, celui-ci comprend successivement, en vue d'assurer la sommation de deux sommes partielles fi, gi, un premier additionneur à propagation de retenue noté CPA1 puis un deuxième additionneur à propagation de retenue bouclé à un registre dont la sortie est elle-même bouclée sur une entrée du deuxième additionneur CPA 2.

De la même manière, en figure 3 au point b, on a représenté un additionneur pour deux sommes partielles fij, cet additionneur étant constitué par un premier additionneur à retenue conservée, noté CSA1, recevant les deux sommes partielles précitées suivies d'un deuxième additionneur à retenue conservée CSA2, lequel est couplé à un premier et à un deuxième registre de sommation, le deuxième registre de sommation étant rebouclé respectivement sur le premier additionneur à retenue conservée CSA1 et sur le deuxième additionneur à retenue conservée CSA2. Deux registres de sortie et un sommateur série permettent de délivrer le résultat de la sommation des sommes partielles fi, gi. On notera que le premier sommateur de sortie enregistre l'une des sorties du deuxième sommateur à retenue conservée CSA2, alors que le deuxième registre de sommation enregistre l'autre sortie de ce dernier.

Aux points c, d, e de la figure 3 on a représenté un mode de réalisation d'un sommateur de sommes partielles pour quatre sommes partielles élémentaires fi, gi, hi, ei ces sommateurs étant réalisés, au point c, au moyen d'additionneurs à propagation de retenue, trois additionneurs à propagation de retenue en cascade CPA1, CPA2, CPA3 sur lesquels sont introduites les sommes partielles précitées plus un quatrième additionneur à propagation de retenue CPA4 couplé à un registre de sortie, rebouclé sur le quatrième additionneur CPA4, de manière analogue au point a de la figure 3. Aux points d et e de la figure 3 au contraire, les sommateurs réalisés comprennent un circuit d'entrée formé par trois additionneurs à retenue conservée notés CSA1 CSA2 CSA3 sur lesquels sont entrées les sommes partielles précitées, puis, de manière analogue au point b de la figure 3, un additionneur à retenue conservée CSA4 couplé à un premier et à un deuxième registre de sommation puis à deux registres 3 et 4 de sortie. On notera qu'au point e de la figure 3 les trois sommateurs à retenue conservée CSA1, CSA2, CSA3 sont connectés selon une structure en arbre, alors qu'au point d de cette même figure ils sont connectés en cascade. On notera également que les sommateurs représentés aux points a à e de la figure 3 constituent des sommateurs au niveau mots des sommes partielles fi, gi, hi, ei.

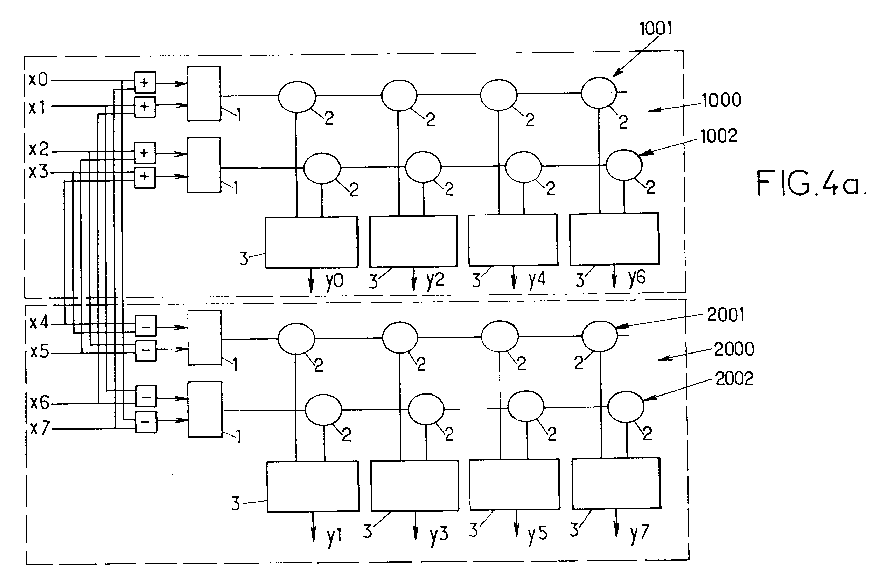

Une description plus détaillée de la mise en oeuvre d'un circuit de traitement de données en vue d'effectuer une transformée en cosinus discrète, notée TCD, par le produit d'une matrice de dimension n x p et d'un vecteur de dimension p au moyen d'un circuit de codage objet de la présente invention tel que représenté en figure 2a ou 2b sera donnée maintenant en liaison avec les figures 4a ou 4b.

Le traitement par transformée en cosinus discrète TCD a été jusqu'à maintenant appliqué à la compression de données en temps réel ou au codage d'images par exemple. En raison de l'intérêt croissant dans le traitement de signal vidéo de ces types de traitement, des circuits intégrés très rapides de traitement par transformée en cosinus discrète sont nécessaires pour satisfaire aux performances requises.

A l'heure actuelle, un nombre important de circuits intégrés de traitement par transformée en cosinus discrète a été proposé par exemple par les Sociétés Inmos , SGS-Thomson, Matra Harris par exemple. Le cadencement de calcul le plus rapide annoncé actuellement est de 27 MHz.

La présente application du circuit de codage, objet de la présente invention, consiste en un circuit intégré de type VLSI pour traitement par transformée TCD. Le circuit objet de la présente invention permet en particulier d'atteindre des vitesses très supérieures bien que la surface de circuit intégré nécessaire pour assurer un tel traitement soit inférieure.

Une telle utilisation est basée essentiellement sur l'application directe du circuit de codage dédié objet de la présent invention. Bien entendu, ainsi qu'il a été d'ailleurs décrit précédemment dans la description, le circuit intégré de traitement par transformée en cosinus discrète TCD est basé sur l'application d'une matrice de transformation à coefficient constant pour une longueur de transformation constante. En conséquence, et conformément à l'objet de la présente invention, la conception logique de l'ensemble des circuits est simplifiée. On notera également que l'utilisation d'additionneurs à retenue conservée permet d'améliorer hautement la vitesse de calcul ainsi qu'il sera décrit ultérieurement dans la description.

On rappellera, pour mémoire, qu'un traitement par transformée en cosinus discrète TCD de longueur N est défini selon la relation ci-après :

$$Y_k = \sum_{i=0}^{N-1} x_i C_k \cos \frac{2\pi}{4N}(2i+1)k \; ; \; \text{pour } k = 0,1,\ldots,N-1$$

où $C_0 = \frac{1}{\sqrt{2}}$ et $C_i = 1$ pour les autres i.

Conformément à un aspect général de mise en oeuvre du circuit de transformée en cosinus discrète objet de la présente invention, ainsi que représenté en figure 4a ou 4b, les circuits de codage conformes à l'objet de la présente invention sont agencés de façon à constituer une première voie, notée 1000, permettant le traitement de la somme des composantes variables de rang r et s soit les composantes xr et xs telles que r + s = p et une deuxième voie, notée 2000, permettant le traitement de la différence des composantes variables de rang r et s telles que r + s = p.

Chacune des première 1000 et deuxième 2000 voies de traitement est subdivisée en une pluralité de voies élémentaires formées par un circuit de codage selon la présente invention. En outre, la sortie d'un réseau 2 formant matrice bidimentionnelle du circuit de codage selon l'invention formant chaque voie élémentaire est interconnectée à un dispositif sommateur 3 c'est à dire à l'un des dispositifs sommateurs représentés précédemment en figure 3.

Une application plus spécifique par traitement par transformée en cosinus discrète de longueur 8 sera maintenant décrite en liaison avec les figures 4a et 4b.

De manière générale, une transformée en cosinus discrète de longueur 8 peut être décomposée selon le produit de transformation ci-après :

$$
\begin{bmatrix} Y_0 \\ Y_2 \\ Y_4 \\ Y_6 \end{bmatrix} = \begin{bmatrix} \cos 4\theta & \cos 4\theta & \cos 4\theta & \cos 4\theta \\ \cos 2\theta & \cos 6\theta & -\cos 6\theta & -\cos 2\theta \\ \cos 4\theta & -\cos 4\theta & -\cos 4\theta & \cos 4\theta \\ \cos 6\theta & -\cos 2\theta & \cos 2\theta & -\cos 6\theta \end{bmatrix} \begin{bmatrix} x_0 + x_7 \\ x_1 + x_6 \\ x_2 + x_5 \\ x_3 + x_4 \end{bmatrix}
$$

$$
\begin{bmatrix} Y_1 \\ Y_3 \\ Y_5 \\ Y_7 \end{bmatrix} = \begin{bmatrix} \cos \theta & \cos 3\theta & \cos 5\theta & \cos 7\theta \\ \cos 3\theta & \cos 9\theta & \cos 15\theta & \cos 21\theta \\ \cos 5\theta & \cos 15\theta & \cos 25\theta & \cos 35\theta \\ \cos 7\theta & \cos 21\theta & \cos 35\theta & \cos 49\theta \end{bmatrix} \begin{bmatrix} x_0 - x_7 \\ x_1 - x_6 \\ x_2 - x_5 \\ x_3 - x_4 \end{bmatrix}
$$

On rappellera simplement que cette décomposition présente un caractère tout à fait général dans le cas de transformée en cosinus discrète de longueur M laquelle peut être calculée par les deux produits précédemment mentionnés de deux matrices M x N et d'un vecteur de longueur ou dimension M.

On rappelle que cette décomposition conduit à une économie du nombre de multiplications et d'additions nécessaires au calcul de la transformée. On notera, ainsi qu'on pourra l'observer de la description ci-après, qu'une telle décomposition a pour effet de simplifier la conception des circuits de traitement tels que représentés en figure 4a et 4b.

Ainsi qu'on l'a représenté en figure 4a, notamment, chaque voie élémentaire 1001, 1002 de la première voie 1000 comporte deux sommateurs en parallèle recevant les composantes variables xo, x7; x1,x6 respectivement x2,x5; x3,x4 et un circuit à quatre réseaux programmables noté 1,2,2,2,2 ce circuit bien entendu correspondant dans sa structure au circuit précédemment décrit dans la description en liaison avec la figure 2a.

Bien entendu, dans chaque circuit chaque réseau programmé correspond aux composantes dédiées constituées par p/2 composantes des lignes des sous matrices de calcul. Ainsi, du point de vue du fonctionnement, est on ramené en fait à effectuer le calcul du produit scalaire d'une ligne de chaque matrice constituant un vecteur de composantes dédiées et des valeurs ou composantes d'entrées xo à x7 combinées ainsi que données précédemment dans la relation de calcul.

En outre, chaque voie élémentaire 2001, 2002 de la deuxième voie 2000 comporte deux soustracteurs en parallèle recevant les composantes variables x4,x3; x2,x5 respectivement x1,x6; xo,x7 et un circuit à quatre réseaux programmés noté encore 1,2,2,2,2 chaque réseau programmé correspondant aux composantes dédiées constituées par p/2 composantes des lignes des sous matrices de calcul.

Enfin, les premières 1000 respectivement deuxième 2000 voies comportent p/2 = 4 dispositifs sommateurs 3 recevant à leur entrée les sorties d'un réseau programmé 2 de chaque voie élémentaire correspondante.

Dans le cas du mode de réalisation de la figure 4a, et dans le cas du traitement d'un bit par cycle, les fonctions d'évaluation du produit scalaire pour des vecteurs de dimension 2 s'écrivent :

f = x.a+y.b et

g = z.c+w.d.

On comprendra bien sûr que les deux fonctions d'évaluation du produit scalaire correspondent en fait à la prise en compte de deux sous ensembles de coefficients de la première ligne de la matrice A précédemment décrite ou B avec les valeurs des composantes variables combinées xo à x7 par exemple.

La fonction évaluation du produit scalaire s'écrit alors :

$$S = f + g = - (f_0 + g_0) + \sum_{i=0}^{N-1} (f_i + g_i) \, 2^{-i}$$

Dans cette relation, on rappelle que fi et gi représentent les sommes partielles délivrées par les réseaux 2 de la première 1001, 2001 respectivement deuxième 1002, 2002 voies élémentaires des voies de traitement 1000 et 2000.

Chaque produit de sous-vecteur et des composantes variables correspondant aux résultats yo, y2, y4, y6 respectivement y1, y3, y5, y7 est obtenu par l'intermédiaire d'un sommateur 3 tel que représenté en figure 3 au point a ou b. On notera bien sûr que les réseaux programmés 2 sont programmés en fonction des coefficients correspondants lesquels représentent les valeurs des composantes dédiées.

Le mode de réalisation du circuit de traitement par transformée en cosinus discrète TCD tel que représenté en figure 4b est au contraire relatif à un traitement à deux bits par cycle. Dans ce cas, conformément au mode de réalisation du procédé de l'invention tel que représenté en figure 1c et du dispositif de codage correspondant tel que représenté en figure 2b, la fonction d'évaluation du produit scalaire peut s'écrire :

$$S = f + g + h + e = 2^{-1} \sum_{i=0; \; i \; pair}^{N-1} (f_i + g_i + h_i + e_i) \, 4^{-i}$$

On notera que dans la relation précédente fi, gi, hi et ei représentent les sommes partielles des sous vecteurs f, g, h et e.

Ainsi qu'on l'a représenté sur la figure 4b précitée chaque voie élémentaire de la première voie 1000 comprend quatre voies élémentaires 1001 à 1004 chaque voie élémentaire comportant deux sommateurs en cascade recevant les composantes variables xo,x7; x1,x6 respectivement x2,x5; x3,x4. Les sommateurs en cascade précités délivrent trois bits de rang successif en parallèle relatifs aux sommes correspondantes xo + x7, x1 + x6, x2 + x5 et x3 + x4. En outre, chaque voie élémentaire est formée par un circuit à quatre réseaux programmés 1,2,2,2,2 chaque réseau programmé 2 correspondant aux composantes dédiées constituées par p/2 composantes des lignes de sous matrices de calcul.

De même, chaque voie élémentaire de la deuxième voie 2000 comprend quatre voies élémentaires 2001 à 2004 chacune des voies élémentaires comprenant deux soustracteurs en cascade délivrant trois bits de rang successif parallèles relatifs aux différences correspondantes x4 - x3, x5 - x2, x1 - x6, x7 - xo. Chaque voie élémentaire précitée comprend en outre un circuit à quatre réseaux programmés 1,2,2,2,2 chaque réseau programmé correspondant aux composantes dédiées constituées par p/2 composantes des lignes des sous matrices de calcul. En outre, et de manière semblable au mode de réalisation de la figure 4a, les premières 1000 et deuxième 2000 voies comprennent p/2 = 4 dispositifs sommateur 3 recevant à leur entrée les sorties d'un réseau programmé de chaque voie élémentaire correspondante.

On notera que les configurations de circuits de traitement TCD tels que représentés en figures 4a et 4b peuvent, bien entendu, être appliquées à des circuits de traitement TCD de dimension plus grande. Un cas particulièrement intéressant apparaît être, notamment, un traitement TCD de longueur 16. De manière habituelle l'on procède au traitement d'un bit par cycle d'horloge de cadencement. Dans ce cas, une configuration semblable à celle qui est représentée en figure 4a peut être utilisée. Compte tenu du fait que chaque entrée correspond à un produit scalaire de dimension 8, un circuit sommateur à 4 entrées est nécessaire. Au total 16 sommateurs à quatre entrée et huit circuits de codage dédié sont nécessaires. De manière plus générale, conformément à l'objet de la présente invention, pour un traitement par transformée en Cosinus discrète TCD de longueur 2M, un nombre 2M de sommateurs à M/2 entrées et M circuits de codage dédié sont nécessaires pour traiter 1 bit par cycle.

On notera enfin que le traitement de 2 bits par cycle d'horloge de cadencement est opportun lorsque la précision interne de calcul par transformée TCD est supérieure à la longueur de transformation.

Dans ce cas, il est alors possible d'utiliser une configuration telle que celle représentée en figure 4b. Pour une transformée TCD de longueur 2M, un nombre de 2M sommateurs à M entrées et 2M circuits de codage dédié sont alors nécessaires.

On a ainsi décrit un procédé et un circuit de codage dédié d'un signal numérique pour déterminer le produit scalaire de deux vecteurs particulièrement performants dans la mesure où la mise en oeuvre de ces derniers permet une réduction sensible en matériel nécessaire à leur mise en oeuvre. Une telle économie de matériel associée à l'utilisation d'additionneurs à retenue conservée permet en outre de diminuer le chemin critique suivi par les données traitées et d'augmenter sensiblement la vitesse de calcul.

En raison du gain de vitesse de traitement par rapport aux circuits de traitement de type classique, le procédé et les circuits de codage dédié selon l'invention apparaissent particulièrement bien adaptés au traitement de données numériques d'images, ainsi qu'à la compression de données numériques.

## Revendications

1. Procédé de codage d'un signal numérique pour déterminer le produit scalaire de deux vecteurs de même dimension p , l'un des vecteurs comportant des composantes dédiées $\{ak\}$ déterminées et l'autre vecteur comportant des composantes variables $\{xk\}$ codées sur N bits, caractérisé en ce que, pour établir la valeur du produit scalaire, exprimée par une fonction valeur du produit scalaire,

$$f(xk,\ ak)\ =\ \sum_{k=1}^{p} ak.xk,$$

ledit procédé consiste :
   - à exprimer ladite fonction valeur du produit scalaire sous forme de sommes partielles de produits fi de variables binaires $\{xki\}$ chaque somme partielle de produits fi prenant l'une des valeurs des composantes fixes $\{ak\}$ selon les valeurs desdites variables binaires $\{xki\}$, selon m possibilités,
   - à décomposer, au niveau bit, chaque somme partielle de produits fi en ses sommes partielles élémentaires au niveau bit fij pour chaque bit de rang j, chaque somme partielle élémentaire fij prenant l'une des valeurs akj selon les valeurs desdites variables binaires $\{xki\}$,
   - à calculer lesdites sommes partielles élémentaires au niveau bit fij par évaluation d'une pluralité de $2^m$ possibilités par variation des valeurs binaires akj, ce qui permet d'effectuer le calcul de chaque somme partielle fi à partir des sommes partielles élémentaires au niveau bit fij.

2. Procédé selon la revendication 1, caractérisé en ce que, afin d'effectuer le calcul pour tous vecteurs de dimension p=2 ou pour tout vecteur résultant à deux composantes a,b; x,y avec (a1=a, a2=b et x1=x, x2=y) sous-ensembles d'un espace vectoriel de dimension p > 2, lesdites sommes partielles de produit fi, avec :

$$x\ =\ -\ xo\ +\ \sum_{i=1}^{N-1} xi\ 2^{-i}$$

$$y\ =\ -\ yo\ +\ \sum_{i=1}^{N-1} yi\ 2^{-i}$$

où xi,yi désignent des variables binaires correspondant aux variables x,y, vérifient la relation :

$$f(x,y; a,b) = - (xo.a+yo.b) + \sum_{i=1}^{N-1} (xi.a+yi.b)2^{-i}$$

avec fi = xi.a + yi.b = xi.$\overline{yi}$.a + $\overline{xi}$.yi.b + xi.yi.c

où c = a + b, chacune des sommes partielles élémentaires au niveau bit, pour chaque bit d'ordre j, vérifiant la relation :

$$fij = xi.\overline{yi}.aj + \overline{xi}.yi.bj + xi.yi.cj \text{ où}$$

aj, bj, cj désignent des valeurs binaires correspondantes.

3. Procédé selon la revendication 1, caractérisé en ce que, afin d'effectuer le calcul pour tout vecteur de dimension p = 1 ou pour tout vecteur résultant à une composante a; x, avec a1=a, x1=x sous-ensemble d'un espace vectoriel de dimension p > 1, la composante variable x étant codée sur N bits, la valeur du produit scalaire est calculée relativement aux deux composantes a,x, la fonction valeur du produit scalaire f étant exprimée sous la forme, pour

$$x = 2^{-1} \sum_{i=o; i \text{ pair}}^{N-1} (-2xi+xi+1+xi+2) \; 4^{-i} \; ,$$

où i désigne le rang des bits de codage sur les N bits, xi,xi+1, xi+2 désignant les valeurs binaires correspondantes,

$$f = x.a = 2^{-1} \sum_{i=o; i \text{ pair}}^{N-1} (-2xi+xi+1+xi+2).a.4^{-i} = 2^{-1} \sum_{i=o; i \text{ pair}}^{N-1} fi.4^{-i}$$

où fi = (-2xi+xi+1+xi+2).a désigne une somme partielle de produit ramenée à un produit partiel sur 3 bits successifs de rang i, i+1, i+2, chaque produit partiel fi pouvant prendre, en fonction des valeurs binaires correspondantes, les valeurs {d=2a,a,o,-a,-d = -2a} , ladite décomposition au niveau bit étant réalisée sous forme de produit élémentaire au niveau bit fij vérifiant la relation, pour chaque bit de rang j des valeurs binaires correspondantes aj, bj des valeurs a et d,

fij (xi, xi+1, xi+2; aj,dj) = [($\overline{Si}$ aj+Si dj)Ni] $\oplus$ Ci relation dans laquelle :

Si = $\overline{xi+1 \oplus xi+2}$, Si désignant un paramètre de contrôle de décalage, Si = 1 si fi = {-d, d} sinon Si=o,

Ni = $\overline{xi.xi+1.xi+2}$ + xi.xi+1.xi+2, Ni désignant un paramètre de contrôle d'absence de valeur zéro,

Ni = 1 si fi= {-d,-a,a,d} sinon Ni=o,

Ci = xi, Ci désignant un paramètre de commande de complément, Ci=1 si fi = {-a,-d} sinon Ci=o, $\oplus$ désigne l'opération OU EXCLUSIF.

4. Circuit de codage d'un signal numérique pour déterminer le produit scalaire de deux vecteurs de même dimension p, l'un des vecteurs comportant des composantes dédiées

$$\{ak\}_{k=1}^{k=p}$$

déterminées et l'autre vecteur comportant des composantes variables

$$\{xk\}_{k=1}^{k=p}$$

codées sur N bits, la valeur du produit scalaire, exprimée par une fonction valeur du produit scalaire,

$$f(xk,ak) = \sum_{k=1}^{k=p}$$

ak.xk, étant réduite sous forme de sommes partielles fi de variables binaires xki , chaque somme partielle de produits fi prenant l'une des valeurs des composantes fixes ak selon les valeurs desdites variables binaires xki selon m possiblités, caractérisé en ce que ledit circuit comprend :

– des moyens (1) de codage logique dédié permettant, à partir desdites variables binaires xki , d'engendrer pour chaque bit de rang j desdites sommes partielles fj, une pluralité de sommes partielles élémentaires au niveau bit fij par évaluation d'une pluralité de $2^m$ possibilités par variation des valeurs binaires akj des bits de même rang j des composantes dédiées

$$\left\{ ak \right\}_{1}^{p} \quad ,$$

– au moins une matrice bidimensionnelle $(2^m,N)$ d'interconnexion (2), ladite matrice bidimensionnelle faisant correspondre à chaque bit de rang j des composantes dédiées ak une valeur et une seule des sommes partielles élémentaires au niveau bit fij, l'ensemble des sommes partielles élémentaires au niveau bit fij définissant la somme partielle fi correspondante.

5. Circuit selon la revendication 4, caractérisé en ce que pour tout vecteur de dimension p=2 ou pour tout vecteur résultant à deux composantes a1=a, a2=b; et x1=x, x2=y sous-ensemble d'un espace vectoriel de dimension p > 2, les sommes partielles de produit fi, avec

$$x = -xo + \sum_{i=1}^{N-1} xi\, 2^{-i}$$

$$y = -yo + \sum_{i=1}^{N-1} yi\, 2^{-i}$$

où xi,yi désignent des variables binaires de rang i des variables x,y, vérifiant la relation :

$$f(x,y;a,b) = (xo.a+yo.b) + \sum_{i=1}^{N-1} (xi.a+yi.b)\, 2^{-i}$$

et

fi = xi.a + yi+b = xi.yi.a + xi.yi.b+xi.yi.c

où c = a+b, chaque somme partielle élémentaire au niveau bit, pour chaque bit d'ordre j, vérifiant la relation

fij = xi.$\overline{yi}$.aj + $\overline{xi}$.yi.bj+xi.yi.cj où

aj, bj, cj désignent les valeurs binaires d'ordre j correspondantes des composantes a,b,c lesdits moyens de codage logique dédié (1) comportent :

– un circuit d'entrée (10) recevant les variables binaires xi,yi de rang i des composantes x,y, ce circuit d'entrée comportant deux inverseurs permettant d'engendrer les valeurs complémentées $\overline{xi},\overline{yi}$ des variables binaires $\overline{xi},\overline{yi}$, ledit circuit d'entrée délivrant lesdites variables binaires xi,yi et leurs valeurs

EP 0 478 431 A1

complémentées $\overline{xi}, \overline{yi}$,

– une pluralité de portes logiques permettant d'engendrer les $2^m = 8$ valeurs possibles des sommes partielles élémentaires au niveau bit fij pour les valeurs correspondantes des valeurs binaires d'ordre j des composantes a,b,c et délivrant les valeurs fij(o,o,o)=o, fij(o,o,1)=xi,yi, fij(o,1,o)=$\overline{xi}$,yi, fij(o,1,1) = yi,fij(1,o,o)=xi.$\overline{yi}$,fij(1,o,1)=xi,fij(1,1,o) = xi.$\overline{yi}$+$\overline{xi}$.yi,fij(1,1,1)=(xi+yi).

6. Circuit selon la revendication 4, caractérisé en ce que pour tout vecteur de dimension p=1 ou pour tout vecteur résultant à une composante a1=a, x1=x sous-ensemble d'un espace vectoriel de dimension p > 1, la composante variable x et la composante variable a étant codées sur N bits, la valeur du produit scalaire est calculée relativement aux deux composantes a,x, la fonction valeur du produit scalaire f étant exprimée sous la forme, pour

$$x = 2^{-1} \sum_{i=o; i\ pair}^{N-1} (-2xi+xi+1 +xi+2)\ 4^{-i}$$

où i désigne le rang de codage sur les N bits, xi, xi+1, xi+2 désignant les valeurs binaires correspondantes,

$$f = x.a = 2^{-1} \sum_{i=o; i\ pair}^{N-1} (-2xi+xi+1 +xi+2)\ .a.4^{-i}$$

$$= 2^{-1} \sum_{i=o; i\ pair}^{N-1} fi.4^{-i}$$

où fi = (-2xi+xi+1+xi+2) .a désigne une somme partielle de produit ramenée à un produit partiel sur 3 bits successifs de rang i, i+1, i+2, chaque produit partiel pouvant prendre, en fonction des valeurs binaires correspondantes, les valeurs {d=2a,a,o,-a,-d=-2a} , lesdits moyens (1) de codage logique dédié comportent :

– un circuit d'entrée (10) recevant les variables binaires xi,xi+1,xi+2 de rang correspondant de la variable x, ce circuit d'entrée comportant trois inverseurs permettant d'engendrer les valeurs complémentées $\overline{xi}$, $\overline{xi+1}$ et $\overline{xi+2}$ des variables binaires xi, xi+1, xi+2, ledit circuit d'entrée délivrant lesdites variables binaires xi, xi+1, xi+2 et leurs valeurs complémentées,

– une pluralité (11) de portes logiques permettant d'engendrer les $2^m = 4$ valeurs possibles des sommes partielles élémentaires au niveau bit fij pour les valeurs correspondantes des valeurs binaires d'ordre j des produits partiels a et d, et délivrant les produits élémentaires au niveau bit fij tels que :

fij (o,o) = xi

fij (o,1) = xi.xi+1 + xi.xi+2 + xi+1.xi+2

fij (1,o) = xi + xi+1 + xi+2

fij (1,1) = $\overline{xi}$.xi+1 + $\overline{xi}$.xi+2

7. Circuit selon l'une des revendications 4 à 6, caractérisé en ce que ladite matrice bidimensionnelle comporte $2^m$ entrées et N sorties, les $2^m$ entrées recevant chacune une valeur de somme partielle ou de produit élémentaire au niveau bit fij, ladite matrice étant constituée en un réseau maillé programmable, entre conducteurs reliés aux dites entrées et conducteurs reliés aux dites sorties, un noeud (P) de réseau étant formé aux adresses correspondantes d'entrée et de sortie de façon à mettre en correspondance chaque sortie avec une entrée de valeur correspondante.

8. Utilisation d'une pluralité de circuits selon l'une des revendications 4 à 7 pour la mise en oeuvre d'un dispositif de calcul de produit scalaire de deux vecteurs de dimension 2q, avec q > 1, caractérisé en ce que

18

EP 0 478 431 A1

chaque vecteur est subdivisé en q sous-vecteur de dimension 2, chaque couple de sous vecteurs relatifs aux composantes dédiées et aux composantes variables étant soumis au moyen d'un desdits circuits pour engendrer une somme partielle correspondante ei,fi,gi,hi, chaque somme partielle ei, fi, gi, hi étant introduite dans un dispositif sommateur.

9. Utilisation selon la revendication 8, caractérisée en ce que, en vue d'effectuer une transformée en cosinus discrète TCD par le produit d'une matrice de dimensions (nxp) et d'un vecteur de dimension p, lesdits circuits sont agencés de façon à constituer :
   – une première voie (1000) permettant le traitement de la somme des composantes variables de rang r et s tel que r+s = p,
   – une deuxième voie (2000) permettant le traitement de la différence des composantes variables de rang r et s tel que r+s = p, chacune des première (1000) et deuxième (2000) voie étant subdivisée en une pluralité de voies élémentaires (1001, 1002, 2001, 2002) formée par un circuit, la sortie d'un réseau (2) formant matrice bidimensionnelle dudit circuit formant chaque voie élémentaire étant interconnectée à un dispositif sommateur (3).

10. Utilisation selon la revendication 9, caractérisée en ce que en vue d'assurer le traitement à raison d'un bit par cycle d'horloge, d'un vecteur de dimension p = 8, chaque voie élémentaire (1001, 1002) de la première voie comporte :
    – deux sommateurs en parallèle recevant les composantes variables xo,x7 ; x1,x6 respectivement x2,x5; x3,x4,
    – un circuit à quatre réseaux programmés (1,2,2,2,2) chaque réseau programmé correspondant aux composantes dédiées constituées par p/2 composantes des lignes des sous matrices de calcul, chaque voie élémentaire (2001, 2002) de la deuxième voie comportant,
    – deux soustracteurs en parallèle recevant les composantes variables x4,x3; x2,x5; respectivement x1,x6; xo,x7,
    – un circuit à quatre réseaux programmés (1,2,2,2,2) chaque réseau programmé correspondant aux composantes dédiées constituées par p/2 composantes des lignes des sous matrices de calcul, lesdites première (1000) respectivement deuxième (2000) voie comportant p/2=4 dispositifs sommateurs (3) recevant à leur entrée les sorties d'un réseau programmé (2) de chaque voie élémentaire correspondante.

11. Utilisation selon la revendication 9, caractérisée en ce que, en vue d'assurer le traitement à raison de deux bits par cycle d'horloge d'un vecteur de dimension p=8, chaque voie élémentaire de la première voie (1000), comprenant quatre voies élémentaires (1001 à 1004), comporte deux sommateurs en cascade recevant les composantes variables xo,x7; x1,x6 respectivement x2,x5; x3,x4 lesdits sommateurs en cascade délivrant 3 bits de rang successifs en parallèle relatifs aux sommes correspondantes xo+x7; x1+x6; x2+x5; x3+x4,
    – un circuit à quatre réseaux programmés (1,2,2,2,2) chaque réseau programmé (2) correspondant aux composantes dédiées constituées par p/2 composantes des lignes des sous matrices de calcul,
    chaque voie élémentaire de la deuxième voie, comprenant quatre voies élémentaires (2001 à 2004), comportant :
    – deux soustracteurs en cascade délivrant 3 bits de rang successifs en parallèle relatifs aux différences correspondantes, x4-x3, x5-x2; x1-x6; x7-xo,
    – un circuit à quatre réseaux programmés (1,2,2,2,2) chaque réseau programmé correspondant aux composantes dédiées constituées par p/2 composantes des lignes des sous matrices de calcul,
    lesdites première (1000) respectivement deuxième (2000) voie comportant p/2 = 4 dispositifs sommateurs (3) recevant à leur entrée les sorties d'un réseaux programmé de chaque voie élémentaire correspondante.

19

$$xk = -xko + \sum_{i=1}^{N-1} xki.2^{-i}$$

$$f(xk,ak) = -\sum_{k=1}^{p}(xko.ak) + \sum_{i=1}^{N-1}\sum_{k=1}^{p}(xki.ak)2^{-i}$$

$$fi = \sum_{k=1}^{p}(xki.ak)$$

$$fi = \sum_{k=1,kimpair}^{p}(xki.\overline{xk+1i}.ak + \overline{xki}.xk+1i.ak+1 + xki.yki\underbrace{(ak+ak+1)}_{ck})$$

$$fij = \sum_{k=1,kimpair}^{p}(xki.\overline{xk+1i}.akj + \overline{xki}.xk+1i.ak+1j + xki.xk+1i\underbrace{(akj+ak+1j)}_{ckj})$$

FIG.1a.

EP 0 478 431 A1

$$x = -x_0 + \sum_{i=1}^{N-1} x_i \, 2^{-i}$$

$$y = -y_0 + \sum_{i=1}^{N-1} y_i \, 2^{-i}$$

$$f(x,y,a,b) = -(x_0.a + y_0.b) + \sum_{i=1}^{N-1} (x_i a + y_i b) \, 2^{-i}$$

$$f_i = x_i.a + y_i.b = x_i.\overline{y_i}.a + \overline{x_i}.y_i.b + x_i.y_i \underbrace{(a+b)}_{c}$$

$$f_{ij} = x_i.\overline{y_i}.a_j + \overline{x_i}.y_i.b_j + x_i.y_i \underbrace{(a+b)_j}_{c_j}$$

## FIG.1b.

## FIG.1d.

$$x = 2^{-1} \sum_{\substack{i=0, i\,pair}}^{N-1} (-2x_i + x_{i+1} + x_{i+2})\, 4^{-i}$$

$$f(x,a) = x.a = 2^{-1} \sum_{\substack{i=0, i\,pair}}^{N-1} (-2x_i + x_{i+1} + x_{i+2}).a.4^{-i}$$

$$f_i = (-2x_i + x_{i+1} + x_{i+2}).a$$

$$f_i = \left[ (\overline{S_i}.a_j + S_i.d_j) N_i \right] \oplus C_i$$

avec

$$S_i = x_{i+1} \oplus x_{i+2}$$

$$N_i = \overline{x_i}.\overline{x_{i+1}}.\overline{x_{i+2}} + x_i.x_{i+1}.x_{i+2}$$

$$C_i = x_i$$

FIG.1c.

FIG.1e.

EP 0 478 431 A1

a= 0 1 0 1 0 1 0 0
b= 1 1 1 1 0 1 1 0
c= 0 1 0 0 1 0 1 0

fij(0,0,0)
fij(0,0,1)
fij(0,1,0)
fij(0,1,1)
fij(1,0,0)
fij(1,0,1)
fij(1,1,0)
fij(1,1,1)

VSS

codeur
dédié

xi
yi

1

2

fij

FIG.2a.

10   1   11

m

x̄i

xi

yi

x̄i
ȳi
xi
ȳi
yi
x̄i
yi
xi
xi
yi
x̄i
ȳi

fij(0,0,0)
fij(0,0,1)
fij(0,1,0)
fij(0,1,1)
fij(1,0,0)
fij(1,0,1)
fij(1,1,0)
fij(1,1,1)

+
+
+
⊕
·

ȳi   yi

FIG.2b.

23

FIG.2c.

FIG.2e.

FIG. 2d.

FIG.3.

(a)

(b)

(c)

(d)

(e)

FIG.4a.

FIG.4b.

EP 0 478 431 A1

EP 0 478 431 A1

Office européen
des brevets

**RAPPORT DE RECHERCHE EUROPEENNE**

Numero de la demande

EP    91 40 2522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0327445 (ETAT FRANCAIS (CNET)) <br> * le document en entier * <br> --- | 1, 4 | G06F15/347 <br> G06F7/544 <br> G06F15/332 |
| A | EP-A-0078101 (ITT INDUSTRIES INC.) <br> * le document en entier * <br> --- | 1, 4 | |
| A | Proceedings of the 8th. symposium on Computer Arithmetic <br> 19 mai 1987, Villa Olmo, Como, Italie <br> pages 13 - 20; S. SMITH et al.: <br> "Synthesis of Area-Efficient VLSI Architectures fot Vector and Matrix Multiplication" <br> * le document en entier * <br> ----- | 1, 4 | |

**DOMAINES TECHNIQUES RECHERCHES (Int. Cl.5 )**

G06F

Le présent rapport a été établi pour toutes les revendications

| Lieu de la recherche | Date d'achèvement de la recherche | Examinateur |
|---|---|---|
| BERLIN | 05 NOVEMBRE 1991 | DURAND, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

29